# FASCICULE DE BREVET EUROPEEN

(11) **EP 0 955 090 B1**
(45) Date de publication et mention de la délivrance du brevet: **11.08.2004**
(21) Numéro de dépôt: 99401079.1
(22) Date de dépôt: 03.05.1999
(51) Int. Cl.: B01J 27/13, C10G 45/52, B01J 23/40, C11C 3/12

(54) **Catalyseur utilisable dans l'hydrogénation des composés aromatiques dans une charge hydrocarbonée contenant des composés soufrés**
Katalysator zur Hydrierung von aromatischen Kohlenwasserstoffen in schwefelhaltigen Kohlenwasserstoffeinsätzen
Catalyst for the hydrogenation of aromatic compounds in a hydrocarbon feedstock containing sulfur

(30) Priorité: 07.05.1998 FR 9805847
(43) Date de publication de la demande: 10.11.1999
(73) Titulaire: Institut Français du Pétrole, 92500 Rueil Malmaison (FR)
(72) Inventeur: Guillon, Emmanuelle, 75012 Paris (FR); Uzio, Denis, 78160 Marly le Roi (FR); Didillon, Blaise, 92500 Rueil Malmaison (FR)
(74) Mandataire: Andreeff, François

(56) Documents cités:
- EP-A- 0 751 204
- EP-A- 0 781 831
- US-A- 3 943 053
- PATENT ABSTRACTS OF JAPAN vol. 098, no. 014, 31 décembre 1998 (1998-12-31) & JP 10 235198 A (SEKIYU SANGYO KASSEIKA CENTER;COSMO OIL CO LTD), 8 septembre 1998 (1998-09-08)

## Description

La présente invention concerne un catalyseur utilisable dans les procédés d'hydrogénation des composés hydrocarbonés insaturés et plus particulièrement dans les procédés d'hydrogénation permettant l'hydrogénation des composés aromatiques contenus dans les charges contenant des traces de composés soufrés. Elle concerne également la préparation de ce catalyseur et les procédés qui l'utilisent.

Il est bien connu qu'un ensemble de coupes pétrolières doivent être prétraitées avant leur utilisation afin d'éliminer des composés indésirables et d'obtenir des produits respectant les normes en vigueur. Dans ce cadre, l'hydrogénation des coupes gazoles revêt une importance toute particulière, du fait des nouvelles normes en soufre et en composés aromatiques dans ce type de combustibles.

La désulfuration se fait généralement dans des conditions et sur des catalyseurs qui ne sont pas capables d'assurer également l'hydrogénation des composés aromatiques. Il est nécessaire d'effectuer alors un deuxième traitement de la coupe dans laquelle la teneur en soufre a été diminuée, afin d'hydrogéner les composés aromatiques contenus dans cette coupe. Cette étape est généralement réalisée par mise en contact de la coupe, en présence d'hydrogène, avec un catalyseur, généralement à base de métal noble. Cependant, du fait que le procédé de désulfuration ne permet jamais d'éliminer totalement les composés soufrés et azotés, les catalyseurs utilisés doivent pouvoir opérer en présence de ces composés, qui sont des inhibiteurs puissants de l'activité des métaux nobles, et doivent par conséquent avoir de bonnes propriétés thio-résistantes.

Un ensemble de catalyseurs présentant des propriétés de thio-résistance a déjà été identifié. Les catalyseurs à base de platine et de palladium ont notamment été décrits pour leurs propriétés de thio-résistance. Dans le cas de l'utilisation de support de type alumine (brevet US-A-3 943 053), il est rapporté qu'il est nécessaire de contrôler précisément les teneurs en métal, ainsi que les conditions de préparation. Cette contrainte entraîne des inconvénients évidents en terme de flexibilité lors de l'extrapolation industrielle de ces formulations. L'utilisation de supports à base de silices-alumines ou de zéolithes a par ailleurs été rapportée. On peut par exemple citer les brevets US-A-4 960 505, 5 308 814 et 5 151 172. L'enseignement que l'on peut dégager de ces différents documents est que le type de zéolithe permettant d'obtenir les propriétés recherchées est très spécifique. D'autre part, l'utilisation de tels supports présente plusieurs inconvénients majeurs, parmi lesquels leur préparation, qui inclut une étape de mise en forme nécessitant l'utilisation de liants minéraux, tels que les alumines. Les méthodes de préparation devront donc permettre des dépôts sélectifs des métaux nobles sur le matériau zéolithique par rapport au dépôt sur le liant, ce qui présente une spécificité supplémentaire liée à ce type de catalyseurs.

On a maintenant découvert, et ceci fait l'objet de la présente invention, un nouveau catalyseur constitué par du platine, du palladium, du fluor et du chlore, sur un support d'alumine. Un tel catalyseur permet de réaliser avantageusement l'hydrogénation des composés aromatiques dans des charges contenant des composés soufrés.

Un autre objet de l'invention consiste en le procédé d'application dudit catalyseur plus particulièrement pour le traitement des "cycle oils", issus des procédés de craquage catalytique. Mais ce catalyseur peut aussi convenir pour tout procédé visant à hydrogéner tout ou partie des composés aromatiques d'une charge contenant des traces de composés soufrés, tel que l'hydrogénation des aromatiques dans les huiles alimentaires.

D'une manière générale, le catalyseur selon l'invention comprend deux métaux nobles du groupe VIII de la classification périodique, à savoir le platine et le palladium, ainsi que deux halogènes à savoir le fluor et le chlore, sur un support comprenant principalement de l'alumine.

Le support est généralement choisi parmi les alumines de transition. Ce type d'alumines présente une surface spécifique, déterminée par les techniques connues par l'homme du métier, comprise entre 100 et 500 m²/g, de préférence entre 150 et 250 m²/g. L'alumine peut être utilisée sous forme de poudre ou préformée sous forme de billes ou d'extrudés.

La teneur totale en platine et en palladium (exprimée en % poids de métal noble) est de 0,1 à 5 % en poids et de préférence de 0,5 à 2 % en poids. Le rapport atomique palladium/platine est de préférence de 0,7/1 à 5/1. La teneur en fluor lorsqu'il est présent est en général de 0,3 à 1,5 % en poids. La teneur en chlore lorsqu'il est présent est en général de 0,3 à 2 % en poids.

Les composants constituant le catalyseur peuvent être introduits de façon séparée sur le catalyseur, selon des étapes successives d'addition utilisant des solutions d'un ou de plusieurs éléments, ou simultanément, en utilisant une solution commune des éléments. Lorsque plusieurs étapes d'imprégnation sont utilisées pour obtenir le catalyseur, des étapes de séchage ou d'activation (calcination ou réduction) peuvent être réalisées entre deux étapes d'imprégnation successives.

Les précurseurs du platine ou du palladium peuvent être des composés complexes solubles dans l'eau, tels que par exemple l'acide hexachloroplatinique, les complexes chloro- ou hydroxo-amminés du platine, le nitrate de palladium, les chloropalladates de métaux alcalins, ou des complexes de coordination solubles dans les solvants organiques, tels que par exemple les complexes bis-acétylacétonates du platine ou du palladium.

Les composés halogénés sont de préférence ajoutés à l'aide d'une solution aqueuse préparée à partir des acides minéraux correspondants, par exemple HF ou HCI. La décomposition des composés organofluorés et/ou organochlorés sur le catalyseur est une méthode qui peut également convenir dans l'invention. Cette méthode permet en effet, dans le cas du fluor, d'éviter, lors de la préparation du catalyseur, l'utilisation de solutions d'acide fluorhydrique, qui est maintenant réglementée.

La préparation du catalyseur se termine généralement par une étape de traitement en température sous air (calcination). Avant utilisation, le catalyseur est réduit par passage d'un mélange gazeux contenant de l'hydrogène sur le catalyseur porté à une température généralement comprise entre 100 °C et 550 °C.

En fonction de la teneur en soufre de la charge à traiter, il peut être avantageux de prétraiter la charge afin de diminuer sa teneur en soufre par des procédés conventionnels d'hydrotraitement. La charge que l'on peut traiter par le procédé de l'invention présente en général des teneurs en soufre inférieures à 2000 ppm en poids, de préférence de 0,5 à 500 ppm en poids.

Le procédé d'hydrogénation selon l'invention est réalisé en général à des températures de 150 à 350 °C, de préférence de 200 à 320 °C. La pression opératoire est généralement de 1,5 à 10 MPa, de préférence de 3 à 9 MPa. La vitesse spatiale, exprimée en volume de charge liquide traitée par volume de catalyseur et par heure, est en général de 0,1 à 10 h⁻¹. Le rapport hydrogène/charge utilisé s'exprime en volume d'hydrogène mesuré dans les conditions normales par volume de charge liquide ; il est généralement de 100/1 à 2000/1.

Les exemples qui suivent illustrent l'invention sans en limiter la portée.

### Exemple n°1 : Préparation d'un catalyseur Pt/Alumine.

L'alumine utilisée est de type gamma cubique. Elle se présente sous forme de billes. Sa surface spécifique est de 191 m²/g et son volume poreux de 0.59 cm³/g. La méthode de préparation utilisée consiste à imprégner en excès les billes d'alumine par une quantité de bis-acétylacétonate de platine dissous dans un volume de toluène équivalent à 5 fois le volume poreux du support engagé. Après 48 heures d'échange, le catalyseur est rincé, séché sous air pendant 12 heures, puis calciné 2 heures à 350 °C sous air en dynamique. Le catalyseur obtenu (A) présente une teneur en platine de 1,3 % en poids.

### Exemple n°2 : Préparation d'un catalyseur Pd/Alumine.

La méthode utilisée est la même que celle décrite dans l'exemple n°1, mais cette fois on opère en présence de bis-acétylacétonate de palladium. Le catalyseur obtenu (B) présente une teneur en palladium de 0,74 % en poids.

### Exemple n°3 : Préparation d'un catalyseur Pt - Pd/Alumine.

Ce catalyseur est obtenu par co-imprégnation en excès de bis-acétylacétonate de platine et de palladium dissout dans le toluène. Après 48h d'échange, le catalyseur est rincé, séché, puis calciné 2h à 350 °C sous air en dynamique. Le catalyseur obtenu (C) présente les teneurs suivantes en métaux :
- 0,62 % en poids de platine
- 0,81 % en poids de palladium.

### Exemple n°4 : Préparation d'un catalyseur Pt/Alumine + Cl + F.

La méthode utilisée consiste à introduire successivement des éléments en utilisant un excès de solution. On introduit d'abord le chlore, puis le fluor et enfin le platine. Le support est traité successivement avec une solution d'acide chlorhydrique à 2 % en Cl pendant 30 minutes de façon à obtenir la bonne quantité de chlore sur le support. Après élimination de la solution, une solution d'acide fluorhydrique est mise en contact avec le support chloré pendant 1 h 30 min. Le support est ensuite rincé et l'imprégnation du platine est réalisée à l'aide d'acide hexachloroplatinique. Après 12 heures d'échange, le catalyseur est séché sous air sec pendant 2 heures à 530 °C. Le catalyseur (D) obtenu contient alors :
- 0,58 % en poids de platine
- 1,49 % en poids de chlore
- 0,48 % en poids de fluor.

### Exemple n°5 : Préparation d'un catalyseur Pt - Pd/Alumine + Cl + F.

Ce catalyseur est préparé à partir du catalyseur D de l'exemple n°4. Après réduction de ce catalyseur, le palladium est déposé, sous atmosphère neutre, par imprégnation en excès d'une quantité précise de bis-acétylacétonate de palladium. Le catalyseur est séché puis calciné 2 heures à 350 °C. Le catalyseur (E) obtenu contient alors :
- 0,58 % en poids de platine
- 0,82 % en poids de palladium
- 0,88 % en poids de chlore
- 0,48 % en poids de fluor.

Dans les Exemples n°6 et n°7 qui suivent, les catalyseurs obtenus comme décrit dans les exemples précédents sont évalués au moyen de deux tests catalytiques, dont les conditions opératoires générales sont les suivantes :
- Pression totale : 40 ou 60 bar
- Charge : selon l'Exemple n°6 ou n°7
- Réacteur : à courant ascendant.

Avant utilisation, le catalyseur subit une étape d'activation sous courant d'hydrogène à 450 °C pendant 2 heures. Cette réduction peut se faire, soit dans le réacteur du test catalytique (conditions *in situ*), soit dans une cellule de réduction annexe (conditions *ex situ*).

### Exemple n°6 : Conversion hydrogénante pour une charge modèle.

On traite une charge contenant 10 % en poids d'orthoxylène dans l'heptane, en présence de 100 ppm de soufre sous forme de diméthyl-disulfure.

Le test catalytique comprend successivement, avec la même charge, les étapes suivantes :
Première étape durant 10 heures
   - Pression totale 40 bar
   - VVH 8 h⁻¹
   - T 100 °C
   - H₂/HC 400 l/l.
Deuxième étape durant 20 heures.
   - Pression totale 40bar
   - VVH 1 h⁻¹
   - T 200 °C
   - H₂/HC 1000 l/l.

La conversion du composé aromatique pour les différents catalyseurs testés est mesurée lors de la deuxième étape du test catalytique, à t = 20 heures et t = 30 heures. La thio-résistance du platine est évaluée en comparant la conversion du catalyseur à celle du catalyseur monométallique à base de platine (Catalyseur A). Les résultats sont regroupés dans le Tableau 1 suivant :

**Tableau 1**

| Catalyseur | Conversion à 20 h (%) | Conversion à 30 h (%) |
|---|---|---|
| A | 5,6 | 4,8 |
| B | 0,4 | 0,4 |
| C | 6,7 | 7,8 |
| D | 29,1 | 19,2 |
| E | 44,1 | 42,7 |

Il apparaît que, pour la même teneur en soufre, la conversion des aromatiques augmente pour le catalyseur Pt - Pd (Catalyseur C) par rapport au catalyseur monométallique à base de platine (Catalyseur A) ou au catalyseur monométallique à base de palladium (Catalyseur B). Cette augmentation est accrue lorsque le platine se trouve en présence de chlore et de fluor (Catalyseur D). Cependant, le gain de conversion est le plus élevé pour le catalyseur qui met en présence à la fois le platine, le palladium, le fluor et le chlore (Catalyseur E). De plus, pour le Catalyseur E, la conversion reste stable dans le temps contrairement au Catalyseur D; en d'autres termes, le phénomène de désactivation est moins important pour ce catalyseur. En conclusion, le Catalyseur E présente donc les meilleures propriétés de thio-résistance.

### Exemple n°7 : Conversion hydrogénante pour une charge de type LCO

Dans le Tableau 2 suivant, on a reporté les caractéristiques de la charge de type LCO.

**Tableau 2**

| Caractéristiques | Charge LCO |
|---|---|
| Densité à 20 °C | 0,904 |
| Soufre (ppm) | 109 |
| Azote (ppm) | 132 |

| Distillation ASTM D 86 (°C) | |
|---|---|
| Point initial | 166 |
| 10 % en poids | 210 |
| 50 % en poids | 266 |
| 90 % en poids | 343 |
| Point final | 415 |

| Composition en aromatiques (% en poids) | |
|---|---|
| Mono-aromatiques | 44 |
| Di-aromatiques | 27 |
| Tri-aromatiques | 3 |
| Total | 74 |
| CA* | 43 |

| | |
|---|---|
| (*) CA = Carbone aromatique mesuré par RMN | |

Les performances catalytiques des catalyseurs dont la description est faite dans les exemples précédents sont ensuite évaluées au cours du test catalytique dont les conditions opératoires sont les suivantes :
- Pression totale 60 bar
- VVH 1 h⁻¹
- T 280 °C
- H₂/HC 450 l/l.

Dans le Tableau 3 suivant, on indique la conversion en aromatiques obtenue avec les Catalyseurs D et E.

**Tableau 3**

| Charge LCO | Catalyseur D | Catalyseur E |
|---|---|---|
| CA* charge initiale (% poids) | 43 | |
| CA* effluent (% poids) | 28 | 22 |
| % HDCA** | 34,8 | 48,8 |

| | | |
|---|---|---|
| (*) CA = Carbone aromatique mesuré par RMN | | |
| (**) HDCA = taux d'hydrogénation du carbone aromatique. | | |

À nouveau, dans le cas de la désulfuration d'une charge réelle, le Catalyseur E se révèle supérieur en terme de conversion, et donc de résistance au soufre, au Catalyseur D. Ce type de catalyseur permet donc de traiter des charges contenant des quantités relativement importantes de soufre (110 ppm en poids dans cet exemple) en présentant un niveau élevé d'activité hydrogénante.

## Revendications

1. Catalyseur thio-résistant, utilisable notamment dans des procédés d'hydrogénation d'hydrocarbures insaturés dans des coupes contenant de faibles quantités de soufre, **caractérisé en ce qu'**il comprend deux métaux nobles du groupe VIII de la classification périodique, à savoir le platine et le palladium, ainsi que deux halogènes, à savoir le fluor et le chlore, sur un support comprenant principalement de l'alumine.

2. Catalyseur selon la revendication 1, **caractérisé en ce que** la teneur totale en platine et en palladium, exprimée en % en poids de métal noble, est de 0,1 à 5 % en poids et le rapport atomique palladium/platine est de 0,7/l à 5/l.

3. Catalyseur selon la revendication 1 ou 2 **caractérisé en ce que** la teneur totale en platine et en palladium, exprimée en % en poids de métal noble, est de 0,5 à 2 % en poids.

4. Catalyseur selon l'une des revendications 1 à 3 **caractérisé en ce que** la teneur en fluor est de 0,3 à 1,5 % en poids.

5. Catalyseur selon l'une des revendications 1 à 4 **caractérisé en ce que** la teneur en chlore est de 0,3 à 2 % en poids.

6. Catalyseur selon l'une des revendications 1 à 5 **caractérisé en ce que** le support est choisi parmi les alumines de transition.

7. Catalyseur selon la revendication 6 **caractérisé en ce que** ledit support d'alumine présente une surface spécifique de 100 à 500 m²/g.

8. Catalyseur selon la revendication 7 **caractérisé en ce que** ledit support d'alumine présente une surface spécifique de 150 à 250 m²/g.

9. Catalyseur selon l'une des revendications 1 à 8 **caractérisé en ce que** l'alumine est sous forme de poudre ou préformée sous forme de billes ou d'extrudés.

10. Procédé d'hydrogénation d'hydrocarbures aromatiques dans une coupe d'hydrocarbures contenant de faibles quantités de soufre, **caractérisé en ce que** l'on fait passer la charge au contact d'un catalyseur selon l'une des revendications 1 à 9.

11. Procédé selon la revendication 10 dans laquelle la charge à traiter consiste en un "cycle oil" issu d'un procédé de craquage catalytique

12. Procédé selon l'une des revendications 10 et 11 dans laquelle la charge à traiter présente une teneur en soufre inférieure à 2000 ppm en poids.

13. Procédé selon l'une des revendications 10 et 11 dans laquelle la charge à traiter présente une teneur en soufre de 0,5 à 500 ppm en poids.

14. Procédé d'hydrogénation d'hydrocarbures aromatiques dans une huile alimentaire **caractérisé en ce que** l'on fait passer la charge au contact d'un catalyseur selon l'une des revendications 1 à 9.

## Patentansprüche

1. Thioresistenter Katalysator, insbesondere verwendbar bei Verfahren zur Hydrierung ungesättigter Kohlenwasserstoffe in geringe Mengen Schwefel enthaltenden Fraktionen, **dadurch gekennzeichnet, dass** er zwei Edelmetalle der Gruppe VIII des Periodensystems der Elemente, nämlich Platin und Palladium, sowie zwei Halogene, nämlich Fluor und Chlor auf einem Träger umfasst, der hauptsächlich Aluminiumoxid umfasst.

2. Katalysator nach Anspruch 1, **dadurch gekennzeichnet, dass** der Gesamtgehalt an Platin und an Palladium, ausgedrückt als Gew.-% des Edelmetalls, von 0,1 bis 5 Gew.-% und das Atomverhältnis Palladium/Platin von 0,7/l bis 5/l liegt.

3. Katalysator nach Anspruch 1 oder 2, **dadurch gekennzeichnet, dass** der Gesamtgehalt an Platin und an Palladium, ausgedrückt in Gew.-% des Edelmetalls, bei 0,5 bis 2 Gew.-% liegt.

4. Katalysator nach einem der Ansprüche 1 bis 3, **dadurch gekennzeichnet, dass** der Fluorgehalt bei 0,3 bis 1,5 Gew.-% liegt.

5. Katalysator nach einem der Ansprüche 1 bis 4, **dadurch gekennzeichnet, dass** der Chlorgehalt bei 0,3 bis 2 Gew.-% liegt.

6. Katalysator nach einem der Ansprüche 1 bis 5, **dadurch gekennzeichnet, dass** der Träger aus den Übergangsaluminiumoxiden gewählt ist.

7. Katalysator nach Anspruch 6, **dadurch gekennzeichnet, dass** dieser Aluminiumoxidträger eine spezifische Oberfläche von 100 bis 500 m²/g aufweist.

8. Katalysator nach Anspruch 7, **dadurch gekennzeichnet, dass** dieser Aluminiumoxidträger eine spezifische Oberfläche von 150 bis 250 m²/g besitzt.

9. Katalysator nach einem der Ansprüche 1 bis 8, **dadurch gekennzeichnet, dass** das Aluminiumoxid in Form von Pulver oder vorgeformt in Form von Kugeln oder Extrudaten vorliegt.

10. Verfahren zur Hydrierung aromatischer Kohlenwasserstoffe in einem geringe Mengen Schwefel enthaltenden Kohlenwasserstoffschnitt, **dadurch gekennzeichnet, dass** man die Charge in Kontakt mit einem Katalysator gemäß einem der Ansprüche 1 bis 9 passieren lässt.

11. Verfahren nach Anspruch 10, bei dem die zu behandelnde Charge aus einem aus einem Verfahren des katalytischen Crackens stammenden "cycle oil" bzw. Rückführöl stammt.

12. Verfahren nach einem der Ansprüche 10 und 11, bei dem die zu behandelnde Charge einen Schwefelgehalt von weniger als 2000 ppm Gewicht aufweist.

13. Verfahren nach einem der Ansprüche 10 und 11, bei dem die zu behandelnde Charge einen Schwefelgehalt von 0,5 bis 500 ppm Gewicht aufweist.

14. Verfahren zur Hydrierung aromatischer Kohlenwasserstoffe in einem Speise- oder Tafelöl, **dadurch gekennzeichnet, dass** man die Charge in Kontakt zu einem Katalysator gemäß einem der Ansprüche 1 bis 9 strömen oder passieren lässt.

## Claims

1. A thio-resistant catalyst particularly for use in processes for hydrogenating unsaturated hydrocarbons in cuts containing small quantities of sulphur, **characterized in that** it comprises two noble metals from group VIII of the periodic table, namely platinum and palladium, as well as two halogens namely fluorine and chlorine, on a support principally comprising alumina.

2. A catalyst according to claim 1, **characterized in that** the total platinum and palladium content, expressed as the % by weight of noble metal, is 0.1% to 5% by weight and the palladium/platinum atomic ratio is 0.7/l to 5/l.

3. A catalyst according to claim 1 or claim 2 **characterized in that** the total platinum and palladium content, expressed as the % by weight of noble metal, is 0.5% to 2% by weight.

4. A catalyst according to any one of claims 1 to 3 **characterized in that** the fluorine content is 0.3% to 1.5% by weight.

5. A catalyst according to any one of claims 1 to 4 **characterized in that** the chlorine content is 0.3% to 2% by weight.

6. A catalyst according to any one of claims 1 to 5 **characterized in that** the support is selected from transition aluminas.

7. A catalyst according to claim 6 **characterized in that** the specific surface area of said alumina support is 100 to 500 m²/g.

8. A catalyst according to claim 7 **characterized in that** the specific surface area of said alumina support is 150 to 250 m²/g.

9. A catalyst according to any one of claims 1 to 8 **characterized in that** the alumina is in the form of a powder or is pre-formed into beads or extrudates.

10. A process for hydrogenating aromatic hydrocarbons in a hydrocarbon cut with a low sulphur content, **characterized in that** the feed is brought into contact with a catalyst according to any one of claims 1 to 9.

11. A process according to claim 10 in which the feed to be treated consists of a cycle oil from a catalytic cracking process.

12. A process according to any one of claims 10 and 11 in which the sulphur content of the feed to be treated is less than 2000 ppm by weight.

13. A process according to any one of claims 10 and 11 in which the sulphur content of the feed to be treated is 0.5 to 500 ppm by weight.

14. A process for hydrogenating aromatic hydrocarbons in an edible oil **characterized in that** the feed is brought into contact with a catalyst according to any one of claims 1 to 10.
